**Europäisches Patentamt**

**European Patent Office**

**Office européen des brevets**

(11) Veröffentlichungsnummer: **0 264 011 B1**

# (12) EUROPÄISCHE PATENTSCHRIFT

(45) Veröffentlichungstag der Patentschrift: **06.11.91**

(21) Anmeldenummer: **87114109.9**

(22) Anmeldetag: **26.09.87**

(51) Int. Cl.⁵: **A01D 23/02, A01D 23/00**

(54) **Nachköpfeinrichtung für Rübenerntemaschinen.**

(30) Priorität: **16.10.86 DE 3635245**
**17.09.87 DE 3731246**

(43) Veröffentlichungstag der Anmeldung:
**20.04.88 Patentblatt 88/16**

(45) Bekanntmachung des Hinweises auf die
Patenterteilung:
**06.11.91 Patentblatt 91/45**

(84) Benannte Vertragsstaaten:
**BE FR GB IT NL**

(56) Entgegenhaltungen:
**AT-B- 269 540        DE-A- 2 510 025**
**DE-A- 3 151 484      FR-A- 1 346 781**
**FR-A- 1 464 855      FR-A- 2 201 613**
**US-A- 4 311 104**

(73) Patentinhaber: **Franz Kleine Maschinenfabrik
GmbH & Co.
Ferdinand-Henze-Strasse 2
W-4796 Salzkotten(DE)**

(72) Erfinder: **Luehs, Herbert
Enzianstrasse 18,
W-4793 Bueren-Brenken(DE)**

(74) Vertreter: **Rehberg, Elmar, Dipl.-Ing.
Postfach 3162 Am Kirschberge 22
W-3400 Göttingen(DE)**

**Beschreibung**

Die Erfindung betrifft eine Nachköpfeinrichtung für Rübenerntemaschinen mit mehreren, den einzelnen Rübenreihen zugeordneten, im Abstand nebeneinander angeordneten Nachköpfern.

Eine Nachköpfeinrichtung ist aus der AT-B-269 540 bekannt. Dabei ist für jede Rübenreihe ein Nachköpfer vorgesehen, der als wesentliche Elemente ein Köpfmesser und eine Tasteinrichtung aufweist. Der Nachköpfer weist eine Halterahmen auf, auf dem das Köpfmesser ortsfest und demgegenüber die Tasteinrichtung verstellbar angeordnet sind. Der Halterahmen wird über einen Parallelogrammlenker am Maschinenrahmen geführt, so daß er sich während des Köpfens über den Parallelogrammlenker in vertikaler Richtung auf den jeweiligen Wuchs der Rübe einstellt. Es ist eine Einstellvorrichtung zum Einstellen der Köpfdicke vorgesehen, die für jeden Nachköpfer getrennt vorgesehen und getrennt betätigbar ist. Als Tasteinrichtung dient hier ein Tastrad, welches auf einem Lenker an einem der Parallelogrammlenker gelagert ist, wobei die Einstelleinrichtung zwischen diesen Lenker und den Halterahmen eingeschaltet ist. Um sicher über die Rüben hinweg zu gelangen, ist das Tastrad zwangsweise durch einen großen Radius gekennzeichnet. Durch diese Einstelleinrichtung für die Köpfdicke kann der vertikale Abstand zwischen dem Tastrad und dem Köpfmesser eingestellt werden, wobei die Köpfdicke unabhängig von der Wuchshöhe der einzelnen Rübe konstant bleibt. Da das an dem Halterahmen ortsfest angeordnete Köpfmesser über den Parallelogrammlenker parallel zu sich selbst geführt wird, bleibt der Winkel des Köpfmessers relativ zur Horizontalebene bei unterschiedlich hoch gewachsenen Rüben konstant. Am Halterahmen ist über einen weiteren verschwenkbaren Lenker ein auf dem Boden abrollendes Stützrad abgestützt, wobei der Lenker über eine weitere Stellvorrichtung, die bei mehrreihiger Ausbildung der Rübenerntemaschine an jedem Nachköpfer vorgesehen sein muß, verschwenkbar ist. Diese weitere Stellvorrichtung gestattet es, den minimalen Bodenabstand des Köpfmessers einzustellen bzw. durch eine Einstellung zu begrenzen. Bei der Einstellung des minimalen Bodenabstands ändert sich die Einstellung der Köpfdicke nicht, weil die die Köpfdicke bestimmenden Teile vermittels des Parallelogrammlenkers vertikal in der Weise geführt sind, daß sich der vertikale Abstand zwischen Tastrad und Köpfmesser nicht ändert. Der einzelne Nachköpfer ist somit parallelogrammgeführt. Eine mehrreihige Ausbildung dieser Rübenerntemaschine erfordert es, für jeden jeder Reihe zugeordneten Nachköpfer jeweils die Einstellvorrichtung und die Stellvorrichtung separat vorzusehen und einzustellen. Bei einer gemeinsamen, sich auf die Nachköpfer mehrerer Rübenreihen beziehenden Stellvorrichtung müßten die Nachköpfer notwendigerweise quer zur Arbeitsrichtung untereinander verbunden sein, so daß die einzelnen Nachköpfer in den einzelnen Reihen nicht mehr unabhängig voneinander arbeiten könnten.

Eine im wesentlichen vergleichbare Nachköpfeinrichtung ist auch aus der DE-A-25 10 025 bekannt. Bei dieser Rübenerntemaschine ist zunächst das Maschinengestell über eine Stellvorrichtung insgesamt höheneinstellbar ausgebildet, wobei diese Stellvorrichtung sich auf sämtliche auf dem Maschinengestell vorgesehenen Arbeitsgeräte, wie Putzer u. dgl., jedoch nicht auf die Nachköpfeinrichtung auswirkt. Diese Stellvorrichtung ist daher weder mit der Einstellvorrichtung der Köpfdicke noch mit einer Stellvorrichtung für die Ein- und Verstellung der mittleren Schnitthöhe, noch mit einer Stellvorrichtung für die Ein- und Verstellung eines minimalen Bodenabstands des Köpfmessers vergleichbar. An dem Maschinengestell ist bei dieser zur Bearbeitung einer Rübenreihe bestimmten Nachköpfeinrichtung ein ein Köpfmesser tragender Messerhalter ebenfalls über zwei Parallelogrammlenker schwenkbar gelagert. An dem Messerhalter ist höhenveränderlich eine Haltestange angeordnet, die einen Schleiftaster trägt. Der Schleiftaster ist über eine Welle an der Haltestange befestigt, die eine zusätzliche Einstellung durch Verschwenkung ermöglicht. Damit wird eine Einstellvorrichtung zur Einstellung der Köpfdicke geschaffen, wobei die Köpfdicke letztlich durch den Abstand des Schleiftasters von dem Köpfmesser festgelegt ist. Da bei dieser Nachköpfeinrichtung der Messerhalter durch den Parallelogrammlenker über den an der einzelnen Rübe geführten Schleiftaster höhenveränderlich geführt wird, bleibt die eingestellte Köpfdicke auch bei unterschiedlich hohem Wuchs der Rüben gemäß ihrer Einstellung konstant. Die Köpfdicke kann aber auf die zuvor beschriebene zweifache Weise auch auf andere Köpfdickenwerte eingestellt werden. Um zu verhindern, daß der das Köpfmesser tragende Messerhalter bei großen Abständen zwischen den Rüben in der Reihe oder bei in der Reihe fehlenden Rüben zu tief absinkt und dabei beispielsweise in den Erdboden gerät, ist ein verstellbarer Anschlag zur Begrenzung einer niedrigsten Schnitthöhe, und damit des minimalen Bodenabstands des Köpfmessers, vorgesehen, der mit dem Parallelogrammlenker der Nachköpfeinrichtung und dem Maschinengestell zusammenarbeitet. Über eine vorgespannte Feder wird das Köpfmesser und mit ihm auch der Schleiftaster auf die durch den Anschlag festgelegte niedrigste, zweckmäßige Schnitthöhe belastet. Nachteilig ist, daß damit keine mittlere Schnitthöhe, sondern eine niedrigste Schnitthöhe einstellbar ist, und zwar nur an einer einreihig arbeitenden Nachköpfeinrichtung.

Auch die Einstellvorrichtung der Köpfdicke ist nur einreihig ausgebildet. Die Einstellung der Köpfdicke ist darüberhinaus ungenau und nur mit erheblichem Zeitaufwand sowie mit besonderen Hilfsmitteln möglich. Dies ergibt sich zum einen aus der schlechten Zugänglichkeit der den Schleiftaster tragenden Haltestange, die unterhalb des Maschinengestells angeordnet ist, so daß für eine solche Verstellung letztendlich die gesamte Maschine hochgehoben werden muß. Die Einstellung der Köpfdicke durch Verschieben der Haltestange zu dem Messerhalter ist nur relativ ungenau möglich, da eine nicht unerhebliche Gewichtskraft auf der Haltestange lastet. Eine Feineinstellung ist durch Verdrehen der Welle des Schleiftasters möglich. Damit werden jedoch die Schleiftaster schräg angestellt, was wiederum nachteilig sein kann. Die einmal eingestellte Köpfdicke ist dann konstant, und zwar unabhängig von dem unterschiedlich hohen Wuchs der Rüben im Feld. Vorteilhaft ist aber bereits die Einstellung der Köpfdicke unabhängig von der Einstellung der niedrigsten, zweckmäßigen Schnitthöhe möglich.

Der Erfindung liegt die Aufgabe zugrunde, als Weiterbildung des Stands der Technik eine Nachköpfeinrichtung aufzuzeigen, die gemeinsame zentrale Verstellung der den einzelnen, zu bearbeitenden Rübenreihen zugeordneten Nachköpfer ermöglicht, wobei einerseits die Köpfdicke und andererseits eine mittlere Schnitthöhe zentral und unabhängig voneinander einstellbar sein sollen. Dabei soll die Anordnung der Köpfmesser der einzelnen Nachköpfer parallel zum Boden bei der Ein- und Verstellung der mittleren Schnitthöhe erhalten bleiben.

Erfindungsgemäß wird dies durch die im Anspruch 1 angegebenen Merkmale erreicht. Es handelt sich um lenkergesteuerte Nachköpfer, die über eine zentrale Einstelleinrichtung gemeinsam hinsichtlich der Köpfdicke ein- und verstellbar sind. Desweiteren wird eine weitere zentrale Stellvorrichtung für die Ein- und Verstellung einer mittleren Schnitthöhe geschaffen, in welcher das Köpfmesser horizontal, also parallel zum Boden, steht. Da das Köpfmesser an jedem Nachköpfer lenkergeführt ist, verändert sich der Winkel des Köpfmessers beim Köpfen unterschiedlich hoch gewachsener Rüben laufend. Die mittlere Schnitthöhe kann auch mit dem minimalen Bodenabstand übereinstimmen, wobei eben dann das Köpfmesser in dieser Stellung horizontal ausgerichtet ist.

Der minimale Bodenabstand des Köpfmessers jedes Nachköpfers wird vorliegend durch Anschläge, die nicht weiter interessieren, begrenzt. Der auch hier an jedem Nachköpfer vorgesehene Parallelogrammlenker gehört funktionsmäßig zur Verstelleinrichtung für die mittlere Schnitthöhe; er führt beim Köpfen unterschiedlich hoch gewachsener Rüben keine Bewegung aus, sondern diese Bewegung erfolgt separat für jede Rübenreihe über die jeweilige, quer zur Fahrtrichtung liegende Achse, um den jeder Messerhalter schwenkt. Weil die beiden Lenker des Parallelogrammlenkers während des Köpfens keine Bewegung ausführen, ist es möglich, einen gemeinsamen, durchgehenden Querträger vorzusehen, über welchen letztendlich die Stellvorrichtung auf die einzelnen Nachköpfer einwirkt. Eine als Schleiftaster ausgebildete Tasteinrichtung erweist sich vorteilhaft als sehr kompakt. Da die beiden Parallelogrammlenker und damit auch die als Koppelglied wirkende, die beiden Enden der Parallelogrammlenker verbindende Halterung während des Köpfens keine Bewegung ausführt, ist es möglich, hier eine zentrale Einstellvorrichtung für die Köpfdicke mehrerer Nachköpfer zu verwirklichen und eine gemeinsame Welle der Einstellvorrichtung vorzusehen, über deren Drehung die Haltestangen mehrerer benachbarter Nachköpfer gemeinsam verstellt werden können. Durch die axiale Verschiebbarkeit der Haltestange in Verbindung mit der lenkergesteuerten Aufhängung des Köpfmessers an jedem Nachköpfer wird es trotz zentraler Köpfdickeneinstellung einerseits und trotz zentraler mittlerer Schnitthöheneinstellung andererseits möglich, daß sich jede Tasteinrichtung und jedes zugeordnete Köpfmesser jedes Nachköpfers unabhängig von der betreffenden Nachbareinheit bewegt; damit können die Nachköpfer in den einzelnen Rübenreihen unabhängig voneinander beim Köpfen arbeiten, d. h. unabhängig voneinander gleichzeitig unterschiedlich hoch gewachsene Rüben in den einzelnen Rübenreihen individuell köpfen. Je nach den Erntebedingungen, also dem unterschiedlich hohen mittleren Wuchs der Rüben auf einem Feld, kann die mittlere Schnitthöhe eingestellt werden. Unabhängig davon kann die Köpfdicke gewählt werden, beispielsweise in Abhängigkeit davon, ob eine Blattbergung erfolgen soll oder nicht. Der zentral mögliche Einstellvorgang für die Köpfdicke einerseits und die mittlere Schnitthöhe andererseits erlaubt es, noch auf dem Feld diese Einstellungen zeitsparend vornehmen zu können, wobei eine gute Zugänglichkeit gegeben ist. Es ist sogar möglich, beispielsweise während der Arbeit auf dem Feld eine Ein- und Verstellung der mittleren Schnitthöhe und/oder eine Einstellung der Köpfdicke vorzunehmen. Dies kann sich u. a. als erforderlich erweisen, wenn innerhalb der Schlaglänge Feldbereiche mit stark unterschiedlichem mittleren Rübenwuchs abwechselnd durchfahren werden müssen. Damit wird letztendlich auch der Ernteertrag verbessert, und zwar sowohl in qualitativer wie auch in quantitativer Hinsicht. Weil die Einstellvorrichtung der Köpfdicke und die Stellvorrichtung für die Ein- und Verstellung der mittleren Schnitthöhe zentral und in gut zugänglicher Weise möglich sind, wird bei der Rübenernte von diesen Verstellmöglichkeiten auch Gebrauch gemacht, indem immer eine optimale Anpassung an den jeweiligen mittleren Rübenwuchs auf dem Feld oder auf Feldbereichen möglich ist.

Der gemeinsame Querträger kann drehbar mit einem der beiden Parallelogrammlenker verbunden und mittels einer Stellschraube verdrehbar sein. Durch das Verdrehen des gemeinsamen Querträgers wird dann jeder Parallelogrammlenker angehoben bzw. abgesenkt. Sie gelangt dann in eine Stellung, die sich während der Arbeit auf dem Feld nicht mehr ändert, wenn keine Verstellung vorgenommen wird.

Die gemeinsame Welle der Einstellvorrichtung für die Köpfdicke kann auf den Halterungen der Nachköpfer über eine Einstellschraube drehbar gelagert sein. Da sich der Parallelogrammlenker während des Köpfens nicht bewegt, ist es möglich, die gemeinsame Welle anzuordnen und diese auf den Halterungen der Nachköpfer benachbarter Reihen zu lagern.

Jede der Haltestangen kann eine Druckfeder aufweisen, die die Haltestangen und damit die Schleiftaster in Richtung auf den Kopf der Rüben belastet. Das eine Ende jeder Haltestange und damit jeweils der eine Schleiftaster, ist also drehbar mit je einem der Messerhalter verbunden. Beim Überfahren einer Rübe wird der Schleiftaster von der Rübe angehoben, wobei der Schleiftaster den Messerhalter mitnimmt. Somit wird das Köpfmesser relativ zu dem Boden individuell entsprechend dem Wuchs der einzelnen Rübe angestellt. Dies erscheint auf den ersten Blick als nachteilig. Dies ist jedoch nicht so, da die Anstellung des Köpfmessers aufgrund des unterschiedlichen Rübenwuchses erfahrungsgemäß nur sehr gering ist, so daß ein Ausbrechen von Rübenteilen nicht zu befürchten ist. Es ergibt sich somit sogar der Vorteil, daß die Köpfdicke verringert wird, wenn eine Rübe überfahren wird, deren Kopf oberhalb der eingestellten mittleren Schnitthöhe liegt. Dies ist deshalb erwünscht, weil bei hoch gewachsenen Rüben das voranlaufende, schlegelnde Werkzeug, wie beispielsweise Häcksler, die Rübe bereits weitgehend entblättert hat, so daß nur eine geringe Köpfdicke vorteilhaft ist. Bei einer niedrig gewachsenen Rübe stehen dagegen Stielreste der Blätter noch auf der Rübe, so daß eine größere Köpfdicke sinnvoll ist. Mithin wird quasi automatisch, wenn auch nur in einem geringen Bereich, die Köpfdicke entsprechend dem Rübenwuchs automatisch angepaßt.

An einem der Hebel kann ein Fortsatz vorgesehen sein, wobei die Einstellschraube an dem Fortsatz angreifend vorgesehen ist. Weiterhin kann an einem der Parallelogrammlenker ein Verlängerungsarm vorgesehen sein, wobei die Stellschraube an dem Verlängerungsarm angreifend vorgesehen ist. Durch das Vorsehen des Fortsatzes und des Verlängerungsarms ist ein weiterer Schritt in Richtung einfacher Ein- und Verstellung der mittleren Schnitthöhe sowie Einstellung der Köpfdicke getan. Der Fortsatz als auch der Verlängerungsarm wirkt dabei als Hebel, so daß der Querträger der Stellvorrichtung bzw. die Welle der Einstellvorrichtung mit nur geringem Kraftaufwand gedreht werden kann.

Das Schwenklager des Messerhalters und das Drehlager der Haltestange jedes Nachköpfers können derart relativ zueinander angeordnet sein, daß sich beim Hochschwenken des Messerhalters die Köpfdicke verkleinert und beim Niederschwenken des Messerhalters die Köpfdicke vergrößert. Hier wird also durch die besondere Anordnung des Schwenklagers jedes Messerhalters und des Drehlagers jeder Haltestange die automatische Einstellung der Köpfdicke entsprechend dem jeweiligen individuellen Rübenwuchs verstärkt. Wird der Schleiftaster und damit der Messerhalter und das Köpfmesser von einer hochgewachsenen Rübe nach oben gedrückt, so verschwenkt der Schleiftaster damit gleichzeitig im Sinn einer Verringerung der Köpfdicke. Von der hochgewachsenen Rübe, die bereits weitgehend entblättert ist, wird also nur noch eine relativ dünne Schicht abgenommen. Genau den umgekehrten Effekt erzielt man bei einer niedrig gewachsenen Rübe. Dort verschwenkt der Schleiftaster im Sinne einer Vergrößerung der mittleren Köpfdicke, so daß auch bei diesen tief gewachsenen Rüben sämtliche Blattreste entfernt werden. Durch Verlagerung des Schwenklagers zwischen der Haltestange und dem Messerhalter sowie durch Änderungen in den Längen der Messerhalter und der Haltestange kann diese Automatik verstärkt oder vermindert werden.

Die Erfindung wird anhand eines Ausführungsbeispiels weiter beschrieben. Es zeigen:

Figur 1      eine schematische Ansicht von schräg hinten auf eine Nachköpfeinrichtung,

Figur 2      eine schematische Seitenansicht eines der Nachköpfer und

Figur 3      eine schematische Darstellung des Drehlagers der Haltestange mit dem Hebel.

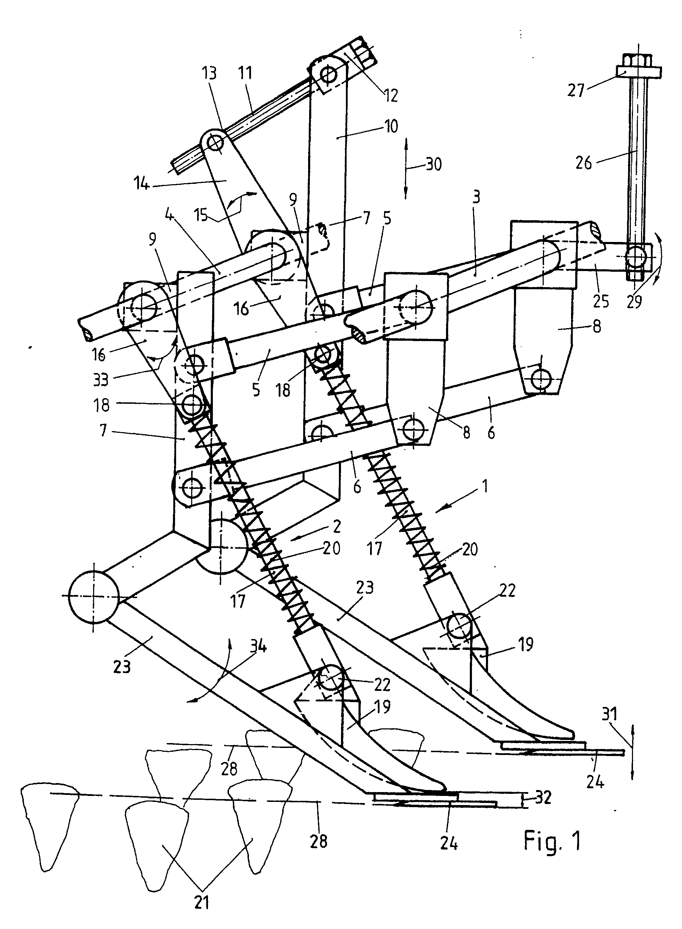

Fig. 1 zeigt eine Nachköpfeinrichtung mit Nachköpfern 1 und 2. Neben den zwei hier beispielhaft dargestellten Nachköpfern 1 und 2 können auch noch weitere Nachköpfer vorgesehen sein. Alle Nachköpfer sind dann entsprechend den zwei Nachköpfern 1, 2 ausgebildet. Die Nachköpfer 1, 2 sind nebeneinander angeordnet und durch einen Querträger 3 und eine Welle 4 miteinander verbunden. Der Querträger 3 und die Welle 4 stehen in einer Ebene senkrecht zur Zeichnungsebene. Jeder Nachköpfer 1, 2 weist zwei Parallelogrammlenker 5, 6 auf. Die Parallelogrammlenker 5, 6 sind dabei untereinander angeordnet. Das eine Ende des Parallelogrammlenkers 5 jedes Nachköpfers 1, 2 ist drehfest mit dem Querträger 3 verbunden, das andere Ende drehbar mit einer Halterung 7. Die Parallelogrammlenker 6 sind drehbar mit der Halterung 7 jedes Nachköpfers 1 und mit einem Maschinengestell 8 verbunden. An dem Maschinengestell 8 ist der Querträger 3 ortsfest gelagert. An jeder Halterung 7 ist ein Montageteil 9 vorgesehen, in dem die Welle 4 drehbar gelagert ist. Eine der Halterungen 7 weist einen Ansatz 10 auf, an dessen oberem Ende eine Einstellschraube 11 in einer Buchse 12 drehbar befestigt ist. Die Einstellschraube 11 arbeitet mit einer hier nicht weiter dargestellten Gewindebuchse 13 derart zusammen, daß ein Fortsatz 14 in Richtung eines Pfeils 15 verdreht werden kann. Der Fortsatz 14 ist nur an einem der Nachköpfer 1, 2 vorgesehen und erforderlich. Der Fortsatz 14 stellt sich als Fortbildung eines der Hebel 16 dar. Die Hebel 16 der Nachköpfer 1, 2 sind mit der Welle 4 drehfest verbunden. Am unteren Teil der Hebel 16 sind Haltestangen 17 derart gelagert, daß sie einerseits um eine Achse 18 verschwenkbar und andererseits in axialer Richtung der Haltestange 17 verschiebbar sind. An der Haltestange 17 sind Schleiftaster 19 vorgesehen. Über eine Druckfeder 20 werden die Schleiftaster 19 in Richtung auf die Rüben 21 gedrückt. Die Schleiftaster 19 nehmen über nicht weiter dargestellte Drehlager 22 Messerhalter 23 mit.

Das eine Ende jedes der Messerhalter 23 ist drehbar an einer der Halterungen 7 angelenkt. Am anderen Ende der Messerhalter 23 sind Köpfmesser 24 vorgesehen. Einer der Parallelogrammlenker 5 ist mit einem Verlängerungsarm 25 versehen, welcher in fester Verbindung mit dem Parallelogrammlenker 5 steht. Mit diesem Verlängerungsarm 25 arbeitet eine Stellschraube 26 zusammen. Die Stellschraube 26 stützt sich gegen ein Maschinengestellteil 27 ab.

Im folgenden soll nun die Funktionsweise der Nachköpfeinrichtung beschrieben werden. Zur Einstellung einer mittleren Schnitthöhe 28 der Nachköpfer 1 und 2 wird die Stellschraube 26 verdreht. Die Stellschraube 26 stützt sich dabei an dem Maschinengestellteil 27 ab und hebt bzw. senkt den Verlängerungsarm 25 in Richtung eines Pfeils 29. Der Verlängerungsarm 25 ist fest mit einem der Parallelogrammlenker 5 verbunden, so daß sich zunächst einmal dieser Parallelogrammlenker 5 entsprechend dem Pfeil 29 bewegt. Die Bewegung des Parallelogrammlenkers 5 des Nachköpfers 2 wird durch den Querträger 3 hervorgerufen, der mit dem Parallelogrammlenker 5 des Nachköpfers 1 drehfest verbunden ist. Durch die Drehung der Parallelogrammlenker 5 werden die Halterungen 7 in Richtung eines Pfeils 30 bewegt. Die Bewegung der Halterungen 7 erfolgt aufgrund der Parallelogrammlenker 5 und 6 unter Beibehaltung ihrer Orientierung. Mit der Halterung 7 werden die Welle 4 und damit auch die an ihr befestigten Hebel 16 mitbewegt. An den Hebeln 16 greifen die Haltestangen 17 und die Messerhalter 23 an, die mit den Drehlagern 22 gekoppelt sind. Dadurch werden letztendlich die Köpfmesser 24 und die Schleiftaster 19 in Richtung eines Pfeils 31 bewegt. Die Bewegung erfolgt dabei immer gleichsinnig, so daß unabhängig von der eingestellten mittleren Schnitthöhe 28 die Köpfmesser 24 stets parallel zur Schnittrichtung geführt werden. Letztlich wird mit nur einem einzigen Stellvorgang, d. h. lediglich durch Verdrehen der Stellschraube 26, die mittlere Schnitthöhe 28 der Nachköpfer 1 und 2 gleichzeitig eingestellt. Es ist klar, daß hier beispielhaft nur zwei Nachköpfer 1 und 2 dargestellt sind, aber beliebig viele Nachköpfer bei entsprechender Anordnung in der beschriebenen Art verstellt werden könnten. Zur Einstellung einer Köpfdicke 32 wird die Einstellschraube 11 verdreht. Die Einstellschraube 11 stützt sich dabei mit ihrem Kopf an der Buchse 12 und damit letztendlich an dem Ansatz 10 ab. Aufgrund der Drehung der Einstellschraube 11 wird in Verbindung mit der Gewindebuchse 13 die Verlängerung 14 in Richtung des Pfeils 15 bewegt. Diese Bewegung wird als Drehbewegung auf die Welle 4 übertragen. An der Welle 4 sind die Hebel 16 drehfest angeordnet, so daß die Hebel 16 eine Bewegung in Richtung eines Pfeils 33 ausführen. Damit bewegen sich die Achsen 18 auf einer Kreisbahn. Diese Bewegung wird über die Haltestangen 17 auf die Schleiftaster 19 übertragen, die verschwenkt werden, wodurch sich die Köpfdicke 32 ändert. Die Einstellung der Köpfdicke 32 erfolgt unabhängig von der Einstellung der mittleren Schnitthöhe 28. Die Schnitthöhe wird bei jedem Nachköpfer 1, 2 automatisch verändert, wenn sein Schleiftaster 19 über eine die mittlere Schnitthöhe 28 überragende Rübe 21 hingweggleitet. Der Schleiftaster 19 bzw. dessen Haltestange 17 wird dann gegen die Kraft der Druckfeder 20 axial verschoben, wodurch der Messerhalter 23 eine Bewegung entsprechend einem Pfeil 34 ausführt.

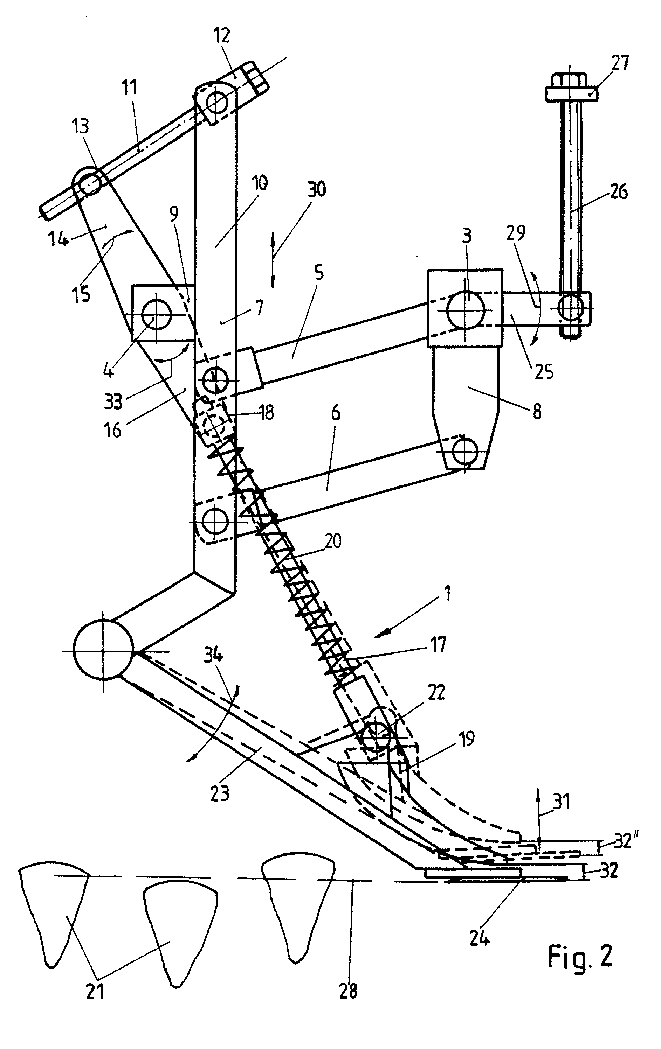

In Fig. 2 ist der Nachköpfer 1 in einer schematischen Seitenansicht dargestellt. Wird der Schleiftaster 19 von einer hochgewachsenen Rübe 21 in Richtung des Pfeils 31 angehoben, so führt der Schleiftaster 19 gleichzeitig eine Schwenkbewegung im Sinne einer Verminderung der Köpfdicke aus. Gestrichelt ist die Lage des Messerhalters 23 mit dem Köpfmesser 24 sowie die Haltestange 17 mit dem Schleiftaster 19 in angehobener Position dargestellt. Es ist deutlich sichtbar, daß in dieser Position die Köpfdicke 32' kleiner als die Köpfdicke 32 ist. Befindet sich dagegen der Schleiftaster 19 über einer kleinwüchsigen Rübe 21 so verschwenkt er im Sinne einer Vergrößerung der Köpfdicke 32. Diese automatische Änderung der Köpfdicke 32, 32' ist erwünscht, da bei hochgewachsenen Rüben 21 durch voranlaufendes schlegelndes Werkzeug bereits eine weitgehende Entfernung der Blätter stattgefunden hat. Es ist also nur noch eine geringe Köpfdicke 32' erforderlich. Bei einer niedrig gewachsenen Rübe 21 dagegen stehen noch Stielreste der Blätter auf der Rübe 21, so daß eine größere Köpfdicke 32 sinnvoll ist.

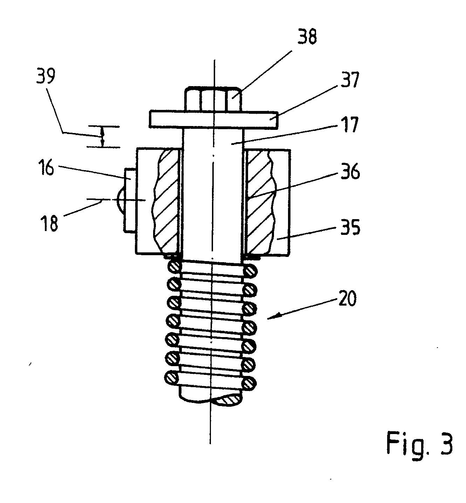

Fig. 3 zeigt das Drehgelenk zwischen der Haltestange 17 und dem Hebel 16. In einem Teil 35 ist eine Bohrung 36 vorgesehen, die derart dimensioniert ist, so daß die Haltestange 17 in der Bohrung 36 frei verschiebbar ist. Das Teil 35 ist mit dem Hebel 16 derart verbunden, so daß es um die Achse 18 verschwenkbar ist. An der Haltestange 17 ist ein Puffer 37 vorgesehen, der von einer Schraube 38 mit der Haltestange 17 fest verbunden ist. Wird der hier nicht dargestellte Schleiftaster 19 von einer hoch gewachsenen Rübe 21 nach oben gedrückt, so verschiebt sich die Haltestange 17 axial, so daß ein Abstand 39 entsteht. Die axiale Verschiebung erfolgt dabei gegen die Kraft der Druckfeder 20. Zu der axialen Verschiebung kommt noch ein Verschwenken des Teils 35 um die Achse 18.

**Bezugszeichenliste:**

| | | |
|---|---|---|
| 1 | = | Nachköpfer |
| 2 | = | Nachköpfer |
| 3 | = | Querträger |
| 4 | = | Welle |
| 5 | = | Prallelogrammlenker |
| 6 | = | Parallelogrammlenker |
| 7 | = | Halterung |
| 8 | = | Maschinengestell |
| 9 | = | Montageteil |
| 10 | = | Ansatz |
| 11 | = | Einstellschraube |
| 12 | = | Buchse |
| 13 | = | Gewindebuchse |
| 14 | = | Fortsatz |
| 15 | = | Pfeil |
| 16 | = | Hebel |
| 17 | = | Haltestange |
| 18 | = | Achse |
| 19 | = | Schleiftaster |
| 20 | = | Druckfeder |
| 21 | = | Rübe |
| 22 | = | Drehlager |
| 23 | = | Messerhalter |
| 24 | = | Köpfmesser |
| 25 | = | Verlängerungsarm |
| 26 | = | Stellschraube |
| 27 | = | Maschinengestellteil |
| 28 | = | mittlere Schnitthöhe |
| 29 | = | Pfeil |
| 30 | = | Pfeil |
| 31 | = | Pfeil |
| 32 | = | Köpfdicke |
| 33 | = | Pfeil |
| 34 | = | Pfeil |
| 35 | = | Teil |
| 36 | = | Bohrung |
| 37 | = | Puffer |
| 38 | = | Schraube |
| 39 | = | Abstand |

**Patentansprüche**

1. Nachköpfeinrichtung für Rübenerntemaschinen mit mehreren, den einzelnen Rübenreihen zugeordneten, im Abstand nebeneinander angeordneten Nachköpfern (1, 2), von denen jeder einen ein Köpfmesser (24) tragenden Messerhalter (23) und eine einen Schleiftaster (19) tragende Haltestange (17) aufweist, mit einer an der Haltestange (17) angreifenden Einstellvorrichtung zum Einstellen der Köpfdicke (4, 11, 12, 13, 16), einer weiteren Stellvorrichtung (3, 5, 6, 7, 8, 25, 26, 27) an dem Nachköpfer (1, 2) zur von der Einstellung der Köpfdicke unabhängigen Ein- und Verstellung einer mittleren Schnitthöhe (28), wobei die weitere Stellvorrichtung und die Einstellvorrichtung zum Einstellen der Köpfdicke jeweils zentral verstellbar auf die mehreren, den einzelnen Rübenreihen zugeordneten Nachköpfer (1, 2) gleichzeitig einwirkend ausgebildet sind, jeder Nachköpfer (1, 2) je eine Halterung (7) aufweist, die je über einen Parallelogrammlenker (5, 6) an dem Maschinengestell (8) der Rübenerntemaschine sowie über die zwischen Maschinengestell (8) und Parallelogrammlenker (5, 6) angreifende Stellvorrichtung mit gemeinsamem Querträger (3) ver- und einstellbar angeordnet ist, der Messerhalter (23) jedes Nachköpfers (1, 2) an der Halterung (7) um eine quer zur Fahrtrichtung liegende Achse schwenkbar gelagert ist, und wobei der Schleiftaster (19) jedes Nachköpfers (1, 2) einerseits in einem auf dem Messerhalter (23) angeordneten Schwenklager (22) schwenkbar und andererseits mit ihrer Haltestange (17) axial verschiebbar und drehbar mit je einem Hebel (16) der gemeinsamen Einstelleinrichtung verbunden ist, während die Hebel (16) der Nachköpfer (1, 2) über eine gemeinsame Welle (4) der Einstelleinrichtung drehfest miteinander verbunden sind.

2. Nachköpfeinrichtung nach Anspruch 1, dadurch gekennzeichnet, daß der gemeinsame Querträger 83) drehfest mit einem der Parallelogrammlenker (5, 6) verbunden und mittels einer Stellschraube (26) verdrehbar ist.

3. Nachköpfeinrichtung nach Anspruch 1, dadurch gekennzeichnet, daß die gemeinsame Welle (4) der Einstelleinrichtung für die Köpfdicke auf den Halterungen (7) der Nachköpfer (1, 2) über eine Einstellschraube (11) drehbar gelagert ist.

4. Nachköpfeinrichtung nach Anspruch 1, dadurch gekennzeichnet, daß jede der Haltestangen (17) eine Druckfeder (20) aufweist, die die Haltestangen (17) und damit die Schleiftaster (19) in Richtung auf den Kopf der Rüben (21) belastet.

5. Nachköpfeinrichtung nach einem der Ansprüche 1 bis 4, dadurch gekennzeichnet, daß an einem der Hebel (16) ein Fortsatz (14) vorgesehen ist, und daß die Einstellschraube (11) an dem Fortsatz (14) angreifend vorgesehen ist.

6. Nachköpfeinrichtung nach Anspruch 2, dadurch gekennzeichnet, daß an einem der Parallelogrammlenker (5, 6) ein Verlängerungsarm (25) vorgesehen ist, und daß die Stellschraube (26) an dem Verlängerungsarm (25) angreifend vorgesehen ist.

7. Nachköpfeinrichtung nach einem der Ansprüche 1 bis 6, dadurch gekennzeichnet, daß das Schwenklager des Messerhalters (23) und das Drehlager (22) der Haltestange (17) jedes Nachköpfers (1, 2) derart relativ zueinander angeordnet sind, daß sich beim Hochschwenken des Messerhalters (23) die Köpfdicke (32, 32') verkleinert und beim Niederschwenken des Messerhalters (23) die Köpfdicke (32, 32') vergrößert.

**Claims**

1. Aftertopping apparatus for beet harvesting machines with a plurality of aftertoppers (1, 2) which are assigned to their individual beet rows, are arranged side by side at a mutual interval and each of which has a knife holder (23) carrying a topping knife (24) and a holding rod (17) carrying a sleeve feeler (19), with a setting device for setting the topping thickness (4, 11, 12, 13, 16), another adjusting device (3, 5, 6, 7, 8, 25, 26, 27) on the aftertopper (1, 2) for setting and adjusting a mean cutting height (28) independently of the setting of the topping thickness, the other adjusting device and the setting device for setting the topping thickness each being designed to act simultaneously in a centrally adjustable fashion on the plurality of aftertoppers (1, 2) assigned to the individual beet rows, each aftertopper (1, 2) having a mounting (7), each of which is arranged in a manner which allows adjustment and setting via a parallelogram link (5, 6) on the machine frame (8) of the beet harvesting machine and via the adjusting device engaging between machine frame (8) and parallelogram links (5, 6) and having a common cross member, the knife holder (23) of each aftertopper (1, 2) being mounted on the mounting (7) in a manner which allows swivelling about an axis lying transversely to the direction of travel, and the sleeve feeler (19) of each aftertopper (1, 2) being connected to in each case one lever (16) of the common setting device on the one hand in swivellable fashion in a swivel bearing (22) and, on the other hand, in a manner axially displaceable and pivotable with its holding rod (17), while the levers (16) of the aftertoppers (1, 2) are connected to one another in torsionally rigid fashion via a common shaft (4) of the setting device.

2. Aftertopping apparatus according Claim 1, characterised in that the common cross member (83) is connected in torsionally rigid fashion to one of the parallelogram links (5, 6) and can be rotated by means of an adjusting bolt (26).

3. Aftertopping apparatus according to Claim 1, characterised in that the common shaft (4) of the setting device for the topping thickness is mounted rotatably on the mountings (7) of the aftertoppers (1, 2) via a setting bolt (11).

4. Aftertopping apparatus according to Claim 1, characterised in that each of the holding rods (17) has a compression spring (20) which loads the holding rods (17) and hence the sleeve feelers (19) towards the top of the beets (21).

5. Aftertopping apparatus according to one of Claims 1 to 4, characterised in that a continuation (14) is provided on one of the levers (16) and in that the setting bolt (11) is provided in a manner engaging on the continuation (14).

6. Aftertopping apparatus according to Claim 2, characterised in that an extension arm (25) is provided on one of the parallelogram links (5, 6) and in that the adjusting bolt (26) is provided in a manner engaging on the extension arm (25).

7. Aftertopping apparatus according to one of Claims 1 to 6, characterised in that the swivel bearing of the knife holder (23) and the pivot bearing (22) of the holding rod (17) of each aftertopper (1, 2) are arranged relative to one another in such a way that, when the knife holder (23) is swivelled up, the topping thickness (32, 32') is reduced and, when the knife holder (23) is swivelled down, the topping thickness (32, 32') is increased.

## Revendications

1. Dispositif décolleteur pour des arracheuses de betteraves avec plusieurs décolleteurs (1, 2) affectés respectivement aux diverses rangées de betteraves, disposés côte à côte et espacés entre eux, chacun desquels présente un porte-couteau (23) portant un couteau décolleteur (24) et une tige porteuse (17) portant un palpeur traînant (19), avec un dispositif de réglage agissant sur la tige porteuse (17) pour le réglage initial de l'épaisseur de décolletage (4, 11, 12, 13, 16); un autre dispositif de réglage (3, 5, 6, 7, 8, 25, 26, 27) sur les décolleteurs (1, 2) pour le pré-réglage et le réglage, indépendamment du réglage initial de l'épaisseur de décolletage, d'une hauteur moyenne de coupe (28), dans lequel le deuxième dispositif de réglage et le dispositif de pré-réglage de l'épaisseur de décolletage sont toujours agencés pour agir simultanément, de manière réglable centralement, sur les divers décolleteurs (1, 2) affectés individuellement aux diverses rangées de betteraves; chaque décolleteur (1, 2) présente un support (7) qui est disposé de manière à être réglable au moyen d'un dispositif de réglage agissant par l'intermédiaire d'un bras de parallèlogramme (5, 6) sur le châssis (8) de la machine arracheuse de betterave, ainsi que par l'intermédiaire d'un dispositif de réglage agissant entre le châssis (8) de la machine et le bras de parallèlogramme (5, 6), avec un support transversal commun (3), le porte-couteau (23) de chaque décolleteur (1, 2) est monté pivotant autour d'un axe transversal au sens de marche; et dans lequel le palpeur traînant (19) de chaque décolleteur (1, 2) est, d'une part, pivotant dans un palier (22) disposé sur le porte-couteau (23) et est d'autre part, avec sa tige porteuse (17), coulissant axialement et relié de manière pivotante à un levier (16) du dispositif de réglage commun, tandis que les leviers (16) des décolleteurs (1, 2) sont solidaires en rotation entre eux au moyen d'un arbre commun (4) du dispositif de pré-réglage.

2. Dispositif décolleteur selon la revendication 1, caractérisé en ce que le support transversal commun (3) est solidaire en rotation avec un des bras de parallèlogramme (5, 6) et peut tourner au moyen d'une vis de réglage (26).

3. Dispositif décolleteur selon la revendication 1, caractérisé en ce que l'arbre commun (4) du dispositif de réglage initial de l'épaisseur de décolletage est monté sur les supports (7) des décolleteurs (1, 2) en pouvant tourner au moyen d'une vis de réglage (11).

4. Dispositif décolleteur selon la revendication 1, caractérisé en ce que chacune des tiges porteuses (17) présente un ressort à compression (20) qui sollicite la tige porteuse (17) et, par suite, le palpeur traînant (19) en direction de la tête des betteraves (21).

5. Dispositif décolleteur selon une des revendications 1 à 4, caractérisé en ce qu'il est prévu un prolongement (14) sur un des leviers (16), et en ce que la vis de préréglage (11) est prévue pour agir sur ce prolongement (14).

6. Dispositif décolleteur selon la revendication 2, caractérisé en ce qu'un bras prolongateur (25) est prévu sur un des bras de parallèlogramme (5, 6), et en ce que la vis de réglage (26) est prévue pour agir sur le bras prolongateur (25).

7. Dispositif décolleteur selon une des revendications 1 à 6, caractérisé en ce que le palier de pivotement du porte-couteau (23) et le palier de rotation (22) de la tige porteuse (17) de chaque décolleteur (1, 2) sont disposés, l'un par rapport à l'autre, de telle manière que, lors d'un pivotement du porte-couteau (23) vers le haut, l'épaisseur de décolletage (32, 32') diminue et que, lors d'un pivotement du porte-couteau (23) vers le bas, l'épaisseur de décolletage (32, 32') augmente.

Fig. 1

Fig. 2

Fig. 3